# DEMANDE DE BREVET EUROPEEN

(11) **EP 4 814 287 A1**
(43) Date de publication de la demande: **30.09.2026**
(21) Numéro de dépôt: 26167821.3
(22) Date de dépôt: 25.03.2026
(51) Int. Cl.: F02M 35/02, F02M 35/04, B01D 53/04, B01D 53/72, F02M 35/024, B01D 46/00

(54) **AGENCEMENT DE PIÈGE À ADSORPTION D'HYDROCARBURES POUR FILTRE À AIR DE MOTEUR, PROCÉDÉ D'ASSEMBLAGE ET FILTRE À AIR**

(30) Priorité: 27.03.2025 FR 2503171
(71) Demandeur: Purflux Filtration, 78280 Guyancourt (FR)
(72) Inventeur: LE MOUELLIC, Bruno, 14500 VIRE (FR); CAILLOT, Paul, 14000 CAEN (FR)
(74) Mandataire: Plasseraud IP

(57) **Abrégé**

Pour simplifier l'assemblage d'un filtre à air (1) incluant un moyen filtrant (MF) dans un boîtier (2a, 2b), tout en intégrant un piège (50) à adsorption de vapeurs d'hydrocarbures, une coque ou composant externe du boîtier est formé en une pièce incluant un logement avec au moins une cavité. Un côté (Z1) de la chambre de filtration, optionnellement placé au-dessus du moyen filtrant dans les conditions d'utilisation, est équipé du piège (50) avec un matériau permettant l'effet d'adsorption remplissant ladite cavité et agencé en couche d'adsorption, accolée directement contre le composant externe, entre le fond (10a) du logement et un élément de recouvrement (18) qui est perméable au gaz. Solidarisé sur la délimitation périphérique du logement intégrée dans ledit composant (2a), ledit élément (18) ferme l'ouverture du logement pour retenir le matériau. Le piège (50) peut réduire les échappements, dans l'environnement, d'hydrocarbures (HCF) refluant d'une ligne d'admission d'air d'un moteur.

## Description

### Domaine technique

L'invention concerne les équipements pour système d'admission d'air qui limitent les échappements d'hydrocarbures dans l'environnement ou dans la ligne d'admission d'air. Il est proposé un agencement de piège à adsorption de vapeurs d'hydrocarbures pour filtre à air, un procédé d'assemblage de l'agencement et un filtre à air intégrant cet agencement sous forme de couvercle.

### Arrière-plan technologique

Il est connu, par exemple par le document US 8262785, de piéger des vapeurs de carburant dans une ligne d'amenée d'air qui communique avec un moteur à combustion interne. Plus particulièrement, le média d'adsorption est interposé entre deux couches perméables à la vapeur, au sein d'une unité d'adsorption qui présente une bride périphérique pour la fixation à une partie rigide d'un filtre à air. Une telle unité peut être disposée dans la chambre de filtration.

La conception et l'installation de l'unité, qui se monte dans un boîtier du filtre, peut poser certaines difficultés, notamment pour le maintien de l'unité de façon interposée entre une ouverture du filtre et une couche de filtration d'air car un volume additionnel important peut être généré. L'apparition de pertes de charge additionnelles peut aussi compliquer la situation, et inciter à augmenter l'espace pour bénéficier des effets d'adsorption d'hydrocarbures par cette unité. Cela peut limiter son application dans les environnements encombrés et/ou pousser à se limiter pour le niveau d'épaisseur du média ou des moyens de filtration servant à épurer l'air entre l'entrée et la sortie.

Plus largement, il existe donc un besoin pour des solutions moins contraignantes pour l'assemblage, tout en garantissant un haut niveau d'efficacité et une robustesse du montage d'un composant à effet d'adsorption de vapeurs d'hydrocarbures.

### Résumé

Afin d'améliorer la situation, il est proposé un agencement de piège à adsorption pour l'adsorption de vapeurs de carburant évaporées dans une ligne d'admission d'air d'un moteur à combustion interne, l'agencement comprenant :
- un composant de boîtier (premier composant), permettant de délimiter une chambre de filtration (et typiquement en étant couplé à au moins un autre composant de boîtier/deuxième composant), intérieurement en particulier dans un filtre à air monté sur la ligne d'admission d'air ;
- un média d'adsorption pour une adsorption de vapeurs d'hydrocarbures,
- un logement avec au moins une cavité, présentant un fond et une délimitation périphérique (qui s'étend typiquement depuis le fond), le logement présentant une ouverture de remplissage qui permet d'introduire le média d'adsorption dans chaque cavité;
- un élément dit de recouvrement fermant l'ouverture, qui est fixé ou scellé sur le premier composant de boîtier en se superposant à la délimitation périphérique.
avec la particularité que le média d'adsorption est maintenu renfermé dans le logement à l'aide de l'élément de recouvrement qui est perméable au gaz, de sorte que ledit média constitue une partie d'adsorption accolée au et/ou en contact contre le premier composant.

Typiquement, le premier composant inclut : un port/ouverture d'entrée ou de sortie de flux d'air débouchant dans la chambre de filtration) ; le logement, de façon à délimiter directement chaque cavité ; et une face intérieure (donc du côté de la chambre de filtration), décalée de l'ouverture d'entrée ou de sortie (ouverture de circulation) et dont une portion de face intérieure correspond au fond du logement. Un contact annulaire de fixation peut être réalisé sur la délimitation périphérique par une zone de marge de l'élément de recouvrement.
De manière générale, l'élément de recouvrement peut présenter une portion de recouvrement qui est homogène dans sa structure, par exemple sans former la moindre ouverture délimitée par une bordure et/ou sans présenter de variations d'épaisseur.

Avec ces dispositions, il est permis de simplifier l'assemblage. Le premier composant et l'élément perméable de recouvrement sont fonctionnellement couplés pour permettre de délimiter un volume interne où s'effectue l'adsorption : ce volume interne peut ainsi être fermé de façon simple, avantageusement sans recours à des pièces de fixation/support interposés entre le premier composant (composant apte à former une face externe du boîtier) et le matériau qui réalise la fonction de piégeage par adsorption des vapeurs d'hydrocarbures.

Dans des modes de réalisation, le média d'adsorption inclut ou est sous forme de granules et/ou billes. Ces particules (granules et/ou billes) peuvent avoir une dimension caractéristique inférieure ou égale à la moitié d'une hauteur (ou profondeur) du logement.
L'ouverture correspond à un port définissant un conduit de sortie, qui peut former/inclure un raccord de connexion fluidique saillant du côté opposé à la face interne du premier composant. Alternativement, deux ports sont prévus et/ou le port/ouverture peut correspondre à un conduit d'admission d'air, qui peut former/inclure un raccord de connexion fluidique (généralement tubulaire).

Dans des modes de réalisation de l'agencement, on a recours à une ou plusieurs des dispositions suivantes :
- le premier composant est une coque du boîtier.
- le premier composant est conformé pour délimiter un creux.
- le port ou ouverture de circulation débouche latéralement dans le creux du premier composant, avec de préférence un débouché latéral/transverse par rapport au débouché axial d'une ouverture (large ouverture) du premier composant traversée par un axe central de ce dernier.
- le logement peut consister en une ou plusieurs cavités intérieures, par exemple au moins deux cavités.
- le logement a une plus petite dimension correspondant à une profondeur, qui est optionnellement une profondeur mesurée parallèlement à un axe central de la coque/pièce formant le premier composant.
- l'ouverture pour le remplissage est au moins aussi large qu'une section de passage de l'ouverture formant l'entrée ou la sortie et/ou est délimitée par un bord libre de la délimitation périphérique.
- le logement inclut une partition scindant l'ouverture en deux accès respectifs (pour deux cavités séparées par la partition).
- le logement inclut des moyens de cloisonnement/partition d'un volume interne délimité par la délimitation périphérique, avec la possibilité de former des contacts ou zones de fixation entre les moyens de cloisonnement et l'élément de recouvrement.
- les moyens de cloisonnement/partition divisent l'ouverture en une pluralité d'accès respectifs à des cavités distinctes qui débouchent dans une même direction.
- les moyens de cloisonnement/partition divisent l'ouverture en une pluralité d'accès respectifs à des cavités distinctes dont au moins débouchent dans la chambre de filtration avec des directions différentes.
- la délimitation périphérique peut inclure au moins deux tronçons de nervures intérieures, dont deux au moins possiblement parallèles, afin de procurer un effet d'atténuation sonore (dans les conditions d'utilisation).
- les moyens de cloisonnement se combinent à la délimitation périphérique pour former un réseau de nervures à effet d'atténuation sonore.
- l'élément de recouvrement est fixé de manière permanente sur la délimitation périphérique.
- l'élément de recouvrement est courbé, de préférence en étant réalisé dans un matériau souple.
- l'élément de recouvrement forme l'unique couche perméable aux vapeurs, séparant le média d'adsorption (et par exemple la totalité de la surface d'adsorption du piège) de la zone d'amont où circule l'air pour quitter le premier composant via le port/ouverture.
- l'élément de recouvrement à une épaisseur sensiblement constante, au moins dans chaque portion d'obturation servant à recouvrir une ouverture de cavité.

Dans des exemples de réalisation, chaque cavité est formée dans un évidement ou projection creuse du premier composant. Eventuellement, la/chaque cavité est délimitée par un relief interne du premier composant, le relief interne formant tout ou partie de la délimitation périphérique.
Le relief peut présenter une géométrie généralement annulaire, en formant un ou plusieurs tronçons droits/rectilignes.

Optionnellement, le média d'adsorption consiste en ou inclut un matériau granulaire ou en vrac (donc distinct de l'élément de recouvrement et apte à s'écouler), composé de particules d'adsorption de vapeurs d'hydrocarbures.
Le média d'adsorption peut consister en ou inclure du charbon actif, de la zéolithe ou d'autres matériaux aptes à adsorber les vapeurs d'hydrocarbures (en pouvant ainsi procurer un effet de piégeage), par exemple en formant des pores de taille caractéristique nanométrique, typiquement égale à environ 1 ou 2 nm. Un média d'un seul tenant peut intégrer les particules du média ou, alternativement, des billes et/ou grains constitutifs du média forment la surface d'adsorption du média, laquelle surface d'adsorption est entièrement prévue entre la face intérieure du premier composant et l'élément de recouvrement.
Plus généralement, les billes ou autres composants granulaires peuvent être intégrées dans le logement, dans la délimitation périphérique d'un cadre formé en relief/directement dans la paroi du premier composant servant à délimiter le creux.

L'effet d'adsorption est par exemple réversible, par exemple avec une désorption permise, typiquement lorsque le média est soumis à un flux d'air ayant une vitesse de débit permettant d'entraîner les vapeurs du côté de la sortie formant l'ouverture de circulation. L'introduction d'air avec un débit d'alimentation du moteur permet dans ce cas d'affaiblir ou faire disparaître la force qui maintient la liaison d'adsorption entre les molécules de média/adsorbant (par exemple du charbon actif) et les hydrocarbures présents sous forme de vapeurs dans le creux du premier composant lors de phases d'arrêt du moteur.
Hormis l'élément de recouvrement, chaque cavité est délimitée par une surface non perméable au gaz et rigide, de sorte qu'une pression intérieure dans le logement peut suivre sensiblement la pression intérieure régnant dans le creux du premier composant dans les conditions d'utilisation. Plus généralement, l'élément de recouvrement peut former un moyen d'équilibrage de pression entre la ou les cavités et le reste du creux du premier composant. Cet élément de recouvrement est apte à retenir des billes de charbon actif ou grains/particules similaire du matériau en vrac.

Dans des modes de réalisation de l'agencement, une ou plusieurs des particularités suivantes peut-être peuvent être prévues :
- le média d'adsorption est versé dans la ou les cavités, lorsque le premier composant est dans un état renversé avec une ouverture de composant débouchant verticalement par le haut, tandis qu'en conditions d'utilisation le premier composant délimite un dessus du logement, avec l'élément de recouvrement placé sous-jacent à la face intérieure du premier composant.
- le média d'adsorption, pouvant être disposé sous forme d'une couche d'adsorption, est en contact direct avec le premier composant.
- le premier composant est réalisé en une seule pièce constitutive/qui permet de constituer une face externe du boîtier (en constituant par exemple à elle seule une face de dessus et une face latérale traversée par la sortie ou ouverture/port similaire de l'agencement).
- le premier composant peut former un couvercle, par exemple constituant un sommet du boîtier dans les conditions d'utilisation, le sommet se situant à l'opposé d'une zone de fond inférieure du boîtier où de l'eau peut être collectée et/ou s'écouler par gravité.
- l'agencement peut être dépourvu, en dehors de l'ouverture (pouvant former la sortie du filtre à air), de moyens de fixation à un véhicule, en étant complémentaire d'une base de filtre à air qui inclut : la ou les attaches à un châssis ou support de montage du filtre à air ; et une autre ouverture/ port, formant par exemple l'entrée du filtre à air.
- le logement est un premier logement recevant le matériau, au moins un autre logement étant aussi formé en décalage du premier logement en étant délimité directement par le premier composant de boîtier (cet autre logement peut être obturé par un élément de recouvrement additionnel, perméable au gaz, distinct et possiblement conçu sous forme d'opercule complètement séparé de l'élément de recouvrement obturant le premier logement).
- la délimitation périphérique du logement présente au moins un bord droit ou une délimitation droite, par exemple parallèle à une face (face latérale) du premier composant.
- le logement présente un angle supérieur à 90° à l'intersection de deux bords de la délimitation périphérique et/ou le logement a une délimitation périphérique polygonale (l'un des bords de la jonction à un angle de plus de 90° pouvant être un bord parallèle à une face de la paroi latérale du premier composant).

Dans des modes de réalisation du premier composant de boîtier, on prévoit une conception avec une ou plusieurs des dispositions qui suivent :
- une partition du logement est prévue, formée par exemple par un relief du premier composant.
- le premier composant de boîtier est formé d'une seule pièce plastique.
- le premier composant de boîtier est creux, par exemple en étant à ouverture large d'un côté axial, à extrémité fermée sur l'autre côté axial, et avec un seul port ou ouverture (typiquement latérale) apte à former la sortie du filtre à air.
- la paroi latérale du premier composant inclut le port/ouverture, qui forme de préférence une sortie pour l'évacuation du flux d'air épuré sortant des moyens de filtration du filtre à air.
- la paroi latérale, par exemple moulée avec l'extrémité fermée ou rapportée sur l'extrémité fermée, entoure la délimitation périphérique avec un écartement prévu tout autour de cette délimitation périphérique.
- le premier composant de boîtier est un couvercle bombé et/ou présentant une hauteur supérieure à un diamètre interne d'une section de passage de l'ouverture (port),
- la couche d'adsorption, continue ou discontinue, s'étend le long de la face intérieure pour permettre l'adsorption des d'hydrocarbures circulant dans une partie creuse du couvercle, au niveau de laquelle débouche intérieurement l'ouverture formant une sortie du filtre à air.
- la couche d'adsorption s'étend à l'opposé d'une face ouverte du couvercle.
- le média d'adsorption est adjacent à un point haut du couvercle dans les conditions d'utilisation avec par exemple la partie creuse qui surmonte une partie filtrante délimitant, avec le premier composant, une zone d'aval de filtration dans la chambre de filtration.
- la zone d'intégration du piège à vapeurs de carburant/hydrocarbures peut constituer/correspondre à un dessus du couvercle bombé, tandis que l'ouverture correspond à un accès latéral du filtre à air, formé sur le couvercle.

Dans des options, le composant de boîtier est un élément de couvercle plat ou à portion plate pour délimiter le fond, apte à former un dessus du filtre à air, avec la couche d'adsorption (continue ou discontinue), qui s'étend :
- le long de la face intérieure pour permettre l'adsorption des d'hydrocarbures circulant sous l'élément de couvercle ; et/ou
- avec une épaisseur minimale, permettant de remplir le logement à au moins 60% (et préférentiellement au moins 90%) de sa profondeur.
En conditions d'utilisation, indépendamment de la géométrie creusée ou non du couvercle/élément de couvercle, l'épaisseur minimale est obtenue par un remplissage du matériau en vrac entre le fond et l'ouverture de remplissage au niveau de laquelle vient ensuite se positionner/fixer l'élément de recouvrement (en se fixant sur la délimitation périphérique de façon à recouvrir le fond et le matériau constituant le média d'adsorption).

Optionnellement, la couche d'adsorption peut s'étendre entre deux extrémités du logement, dont l'une est proximale de l'ouverture (sortie) et l'autre est distale de l'ouverture.
Le composant de boîtier présente une portion d'écartement, adjacente à la première extrémité du logement, pour écarter le piège à hydrocarbures du port ou ouverture (ce qui permet par exemple d'avoir un effet de volume mort ou en dépression, trop proche de l'ouverture, pour le piège : ceci peut procurer un avantage pour la désorption, utile en fonctionnement normal lorsque l'ouverture constitue la sortie afin de rendre le média à nouveau pleinement disponible ou plus disponible par la suite).

Le piège peut présenter une configuration généralement aplatie, avec le recours à une saillie limitée du ou des relief(s) interne(s) de la pièce formant le premier composant. Par exemple l'extension en saillie réalisée par la délimitation périphérique du logement peut être de taille millimétrique, sans dépasser 1 cm par exemple. Dans des exemples de conception du piège à vapeurs d'hydrocarbures, on prévoit une ou plusieurs des dispositions suivantes :
- l'élément de recouvrement est flexible et poreux, en présentant en outre une zone de marge.
- la zone de marge couvre et peut même éventuellement déborder d'un relief (formant tout ou partie de la délimitation périphérique du logement) dont le bord libre forme un support de soudure ou d'attache pour fixer l'élément de recouvrement de manière continue autour de l'ouverture de remplissage.
- l'élément de recouvrement est un média poreux, formant une couche dont une zone de marge annulaire est directement soudée ou collée sur une bordure (bord libre) de l'ouverture de remplissage.
- l'élément de recouvrement est plus large que le diamètre interne de l'ouverture et/ou peut consister en un opercule d'épaisseur inférieure ou égale à 2 mm, qui est de préférence une taille (épaisseur) submillimétrique.
- l'élément de recouvrement forme l'unique interface d'entrée et sortie, par laquelle des vapeurs rentrent et respectivement ressortent du piège.
- l'élément de recouvrement peut consister en ou inclure un opercule qui présente une ou plusieurs courbures, ce qui permet par exemple de suivre un profil non plan de la face intérieure du premier composant.
Dans des variantes, l'élément de recouvrement inclut ou consiste en un souscouvercle rigide, possiblement porteur d'une couche de liaison, sur l'intérieur du souscouvercle qui fait face au média après assemblage de l'agencement.

Selon une particularité, lorsque la pièce formant le premier composant et une deuxième pièce définissent, entre elles, la chambre de filtration où est disposée au moins une partie filtrante, cette dernière peut permettre à des gouttelettes de liquide (par exemple d'eau) de tomber/commencer à tomber par gravité vers une zone de fond opposé/axialement opposée au logement/piège.

Selon un aspect, il est proposé un filtre à air pour une ligne d'admission d'air d'un moteur à combustion interne, le filtre à air comprenant :
- une partie filtrante ;
- un boîtier délimitant une chambre de filtration entre une base de boîtier et un couvercle ; et
- un piège à hydrocarbures
avec la particularité que le couvercle du filtre à air constitue l'agencement tel que présenté plus haut, de sorte que le premier composant est apte à fermer la chambre de filtration en recouvrant la base, avec le piège à hydrocarbures intégré dans un volume interne du couvercle, à l'opposé d'une ouverture du premier composant de boîtier qui permet d'intégrer la partie filtrante, de préférence de manière amovible, dans une position intercalaire entre le piège à adsorption et une extrémité de fond de la base/fond de boîtier prévu dans la base.

Le filtre à air est simple de conception, avec un média d'adsorption qui peut être étalé le long de la face intérieure du premier composant formée comme une pièce externe du filtre. Tout en disposant d'une bonne efficacité de l'adsorption des vapeurs d'hydrocarbures, moins d'étapes peuvent être requises pour intégrer le matériau en vrac ou matériau d'adsorption : cela peut réduire aussi l'impact environnemental par un nombre moindre de pièces et une quantité de matière minimisée, plus proche d'une démarche d'éco-conception.

Dans des exemples de réalisation, le couvercle peut présenter une structure externe en une seule pièce complétée par le média d'adsorption et l'élément de couvercle (ou possiblement plusieurs éléments de couvercle dans des options à plusieurs cavités de logement), en permettant de préférence de délimiter la zone en aval de la partie filtrante. Le port qui correspond à l'ouverture est typiquement formé par un raccord tubulaire.

Dans des réalisations, le logement présente un bord s'étendant transversalement par rapport à un axe central d'un raccord tubulaire formant l'ouverture. La paroi latérale du boîtier sert à délimiter une zone d'aval (côté propre du filtre) prévue entre une face de sortie de la partie filtrante et la sortie formée par le raccord.
La partie filtrante peut présenter une finesse de filtration permettant de retenir les particules solides de taille submillimétrique, par exemple pour ne laisser aucune particule ayant un diamètre ou une dimension caractéristique supérieure ou égale à 5 micromètres.

La partie filtrante peut s'étendre à l'aplomb d'une zone de collecte d'eau délimitée par la base, laquelle inclut une portion de fond possiblement pourvue d'une ouverture pourvue d'un clapet ou d'un organe de vidange, afin de permettre de vider un volume d'eau liquide séparée par les moyens de filtration.

Selon un aspect, il est proposé un procédé d'assemblage d'un agencement à partir d'un premier composant de boîtier d'un filtre à air d'une ligne d'admission de moteur à combustion interne, pour permettre l'intégration d'un piège à adsorption d'hydrocarbures à l'intérieur d'un boîtier du filtre à air, le procédé comprenant :
- la fourniture d'un premier composant de boîtier, moulé, permettant de délimiter une chambre de filtration lorsqu'il est combiné avec un deuxième composant apte à former une base de boîtier ;
- un remplissage par versement d'un matériau en vrac, composé de particules d'adsorption de vapeurs d'hydrocarbures, dans un logement formé au niveau d'une face intérieure du premier composant, de manière à remplir une ou plusieurs cavités, le logement étant obtenu lors du moulage du premier composant de façon à présenter une ouverture de remplissage qui est prévue de préférence à distance d'un fond du logement ;
- fixer ou sceller un élément de recouvrement sur le premier composant de boîtier, de manière à fermer ladite ouverture après le remplissage, l'élément de recouvrement étant perméable au gaz;
le logement étant prévu à distance d'une ouverture de montage délimitée par le premier composant pour permettre d'insérer au moins en partie des moyens de filtration du filtre à air dans la chambre de filtration, ce grâce à quoi le premier composant de boîtier permet d'intégrer le piège à adsorption d'hydrocarbures en regard des moyens de filtration et dans une zone d'amont ou d'aval, par rapport au sens de filtration, qui communique avec une ouverture de circulation (entrée ou sortie) formée dans le premier composant par le moulage.

Ce procédé permet de disposer le matériau d'adsorption, sous forme de poudre, de billes ou de granules en vrac, le long de la face intérieure du premier composant : il est agencé comme une couche d'adsorption, qui peut se répartir en partie discontinues dans des cavités respective du logement. Le contact direct de ce matériau d'adsorption avec le premier composant permet d'éviter des étapes supplémentaires d'assemblage, et typiquement de se passer de toute pièce intermédiaire entre un élément de paroi externe du premier composant, réalisé typiquement en une seule pièce par moulage, et l'élément de recouvrement ou le matériau d'adsorption.
L'élément de recouvrement peut être une pièce ou composant simple à structure essentiellement 2D, sans volume intérieur fermé.

Selon une particularité de ce procédé, le premier composant est moulé en formant :
- une paroi d'extrémité éloignée de l'ouverture de montage ;
- une paroi latérale qui s'étend longitudinalement, autour d'un axe central de l'ouverture de montage, depuis la paroi d'extrémité jusqu'à une bride de fixation ;
Dans des options , chaque cavité du logement est directement délimitée par la paroi d'extrémité et/ou l'ouverture de circulation est formée dans la paroi latérale et avec un écartement par rapport au logement.

Le moulage peut utiliser un moule avec une empreinte rendant le premier composant creux et avec une ouverture large, typiquement de section au moins aussi large que 90% ou la totalité de la section définie par la paroi latérale. La bride peut former un épaulement externe du composant, en périphérie de celui-ci, sans réduire les dimensions de l'ouverture de montage.

On comprend que le procédé d'assemblage peut être réalisé en trois étapes successives : le moulage, le remplissage en matériau d'adsorption et la fermeture du logement par mise en place/fixation de l'élément de recouvrement.
On évite le recours à des petits éléments/pièces en plastique d'attache/support et, par ailleurs, en l'absence de partie métallique structurelle en contact avec les médias d'adsorption et/ou en contact avec le flux gazeux passant dans le premier composant de boîtier, on évite des problèmes de corrosion/altération de parties métalliques.

Un assemblage complet du filtre à air peut ensuite inclure :
- une étape d'installation de la partie filtrante, à distance du piège et par exemple parallèlement à un plan de l'ouverture de montage ;
- une étape d'attache du couvercle ou composant avec le piège, ainsi formé en trois étape, au composant de boîtier complémentaire, par exemple une base avec éventuellement une liaison charnière créée pour faciliter l'ouverture du couvercle ; et
- une fermeture finale, pour fermer de façon étanche le boîtier, ce qui peut finaliser l'assemblage du filtre à air.
La partie filtrante peut être fournie avec/pourvue d'un cadre ou bordure périphérique. Optionnellement, le deuxième composant est fourni avec un piège à eau liquide ou une zone de collecte d'eau liquide,

Le boîtier de filtre à air est verrouillé dans une configuration fermée après les étapes suivantes :
- assemblage de l'agencement susmentionné, afin d'enfermer la totalité du média d'adsorption dans un premier sous-volume interne délimité par le premier composant de boîtier ;
- fourniture, et éventuellement fixation préliminaire par une charnière sur le premier composant, d'un deuxième composant de boîtier formant une base du boîtier ; et
- délimitation complète de la chambre de filtration en réalisant une fermeture du boîtier qui inclut ces deux composants, en plaçant la partie filtrante dans la chambre de filtration pour séparer une zone d'amont, communiquant avec une entrée, d'une zone d'aval communiquant avec la sortie prévue pour l'acheminement d'air épuré, l'ouverture de circulation formant la sortie.

Le premier composant peut être articulé, à l'aide d'un charnière, par rapport au deuxième composant de boîtier qui présente des moyens de fixation sur le véhicule, par exemple pour un raccordement au véhicule à l'opposé de l'extrémité fermée du premier composant.

Dans des options de conception du premier composant, une première cavité et une deuxième cavité sont délimitées directement par le premier composant, avec la deuxième cavité qui présente une contenance supérieure à celle de la première cavité en présentant une géométrie différente de son périmètre.
Deux remplissages peuvent être optionnellement prévus, avec un deuxième remplissage dédié à la deuxième cavité qui est par exemple réalisé avec un matériau dont la composition est différente de celle du matériau remplissant la première cavité.

### Brève description des dessins

D'autres caractéristiques, détails et avantages apparaîtront à la lecture de la description détaillée ci-après, et à l'analyse des dessins annexés, sur lesquels :
La Figure 1 est une vue schématique d'un filtre à air équipé d'un agencement à piège d'adsorption de vapeurs d'hydrocarbures, dans un mode de réalisation non limitatif.
La Figure 2 est une vue en perspective éclatée d'un agencement utilisable dans le filtre de la figure 1, en omettant le média d'adsorption venant remplir chaque cavité.
La Figure 3 est une vue partielle en perspective d'un premier composant de boîtier, utilisé dans un agencement du type montré sur la figure 2 et formant une coque externe avec un fond disposant d'une délimitation en relief pour former une périphérie de chaque cavité du logement pour le matériau adsorbant.
La Figure 4 illustre avec une coupe un filtre à air utilisant un premier composant de boîtier selon un autre mode de réalisation, avec le matériau d'adsorption reçu dans un logement intégré dans la zone d'aval du filtre (côté propre).
La Figure 5A représente un élément de recouvrement apte à former un opercule perméable de fermeture d'un logement tel qu'illustré sur les figures 2 et 3.
La Figure 5B représente un détail de l'agencement, dans une option de logement à au moins deux cavités et avec une ou plusieurs courbures formée(s) pour l'élément de recouvrement réalisé sous forme d'opercule.
La Figure 6 représente, par un schéma, un exemple d'intégration de l'agencement à piège d'adsorption de vapeurs d'hydrocarbures, dans le filtre à air d'une ligne ou conduite d'admission d'air pour un moteur à combustion interne.

### Description de modes de réalisation

Ci-après un exposé détaillé de plusieurs modes de réalisation de l'invention assorti d'exemples et de référence aux dessins. Sur les différentes figures, des références identiques indiquent des éléments identiques ou similaires.

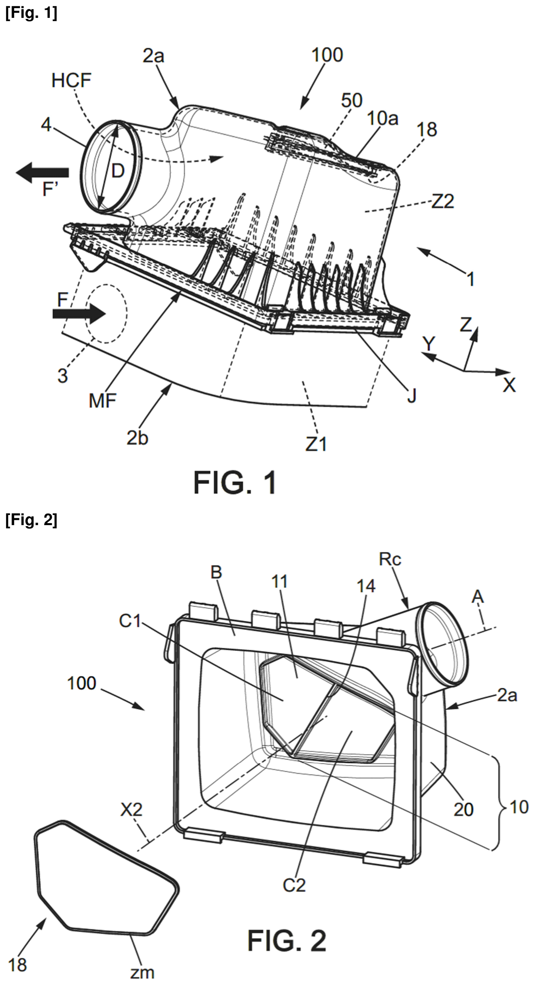

En référence aux figures 1, 2, 4 et 6, on peut voir un filtre à air 1 qui présente un élément filtrant EF ou partie filtrante adaptée, pourvue d'une couche d'un média filtrant ou de moyens de filtrations MF appropriés pour l'épuration d'un flux d'air. Le filtre 1 dispose d'un boîtier 2 pour loger l'élément filtrant EF, typiquement dans un volume intérieur du boîtier 2. Ce filtre à air 1 peut être placé dans un circuit ou ligne d'admission d'air LA pour un moteur 120 à combustion interne. L'élément filtrant EF sépare une zone d'amont Z1 en communication avec une entrée 3 d'une zone d'aval Z2 en communication avec une sortie 4. Le boîtier 2 présente une paroi latérale et définit l'encombrement du filtre 1 servant à l'épuration d'un flux d'air F admis via l'entrée 3, en définissant une chambre de filtration CH correspondant au volume intérieur de ce boîtier 2.

Un logement 10 permettant de recevoir un média ou matériau d'adsorption 5 est prévu intérieurement dans un quelconque des composants externes du boîtier, avec ainsi la possibilité de retenir par adsorption des vapeurs d'hydrocarbures/composants hydrocarbonés. Un tel composant, appelé premier composant 2a de boîtier dans ce qui suit, est par exemple pourvu d'un port ou ouverture Rc par laquelle un flux d'air peut circuler, par exemple pour entraîner les vapeurs à nouveau vers le moteur 120. Généralement, l'ouverture Rc de circulation peut constituer l'entrée 3 pour l'admission du flux d'air F ou la sortie 4 du filtre pour l'évacuation du flux d'air épuré F'. Dans le cas d'un véhicule automobile, le filtre 1 peut :
- soit servir de préfiltre installé en amont, suivant le sens de circulation d'air dans le circuit d'admission d'air, d'un autre filtre formant un filtre principal ;
- soit (dans des modes de réalisation préférés), servir comme dernier filtre avant un collecteur d'admission 106 d'un moteur 120 ou entrée similaire de réception d'air purifié d'un moteur.

Plus largement, comme visible par exemple sur les figures 1 et 2, il est prévu d'intégrer un piège 50 à adsorption de vapeurs d'hydrocarbures en plaçant le média/matériau d'adsorption 5 directement contre une face intérieure F2 du premier composant 2a des composants externes du boîtier 2 (composants 2a et 2b sur la figure 1). Cela constitue un agencement 100 à triple fonction : partie d'enveloppement étanche de la chambre de filtration, guidage de circulation via un port/ouverture de circulation débouchant dans cette chambre, et piégeage par adsorption de vapeurs d'hydrocarbures (avec possibilité préférentielle de désorption - piège non permanent). Le premier composant 2a peut par exemple constituer une coque (avec une partie creuse où peut circuler du gaz). Dans ce cas, l'agencement présente une paroi latérale 20, appartenant au composant 2a, qui peut s'étendre jusqu'à une ouverture O2 qui constitue un accès au travers duquel le média d'adsorption peut passer pour être déposé dans une cavité C1, C2, C3 du logement 10.
Le média d'adsorption, par exemple sous forme de matériau en vrac 5 maintenu stationnaire contre l'élément de recouvrement 18 en conditions d'utilisation, est typiquement éloigné de cette ouverture O2 en étant retenu par un élément de recouvrement 18 venant former localement une doublure de cloison, parallèlement à la face F2. Le maintien dans une telle région, entre le fond 10a du logement 10 et un élément de recouvrement 18 qui est perméable au gaz, est permis par une fixation périphérique de l'élément de recouvrement 18, par exemple en utilisant une zone de marge zm de cet élément.

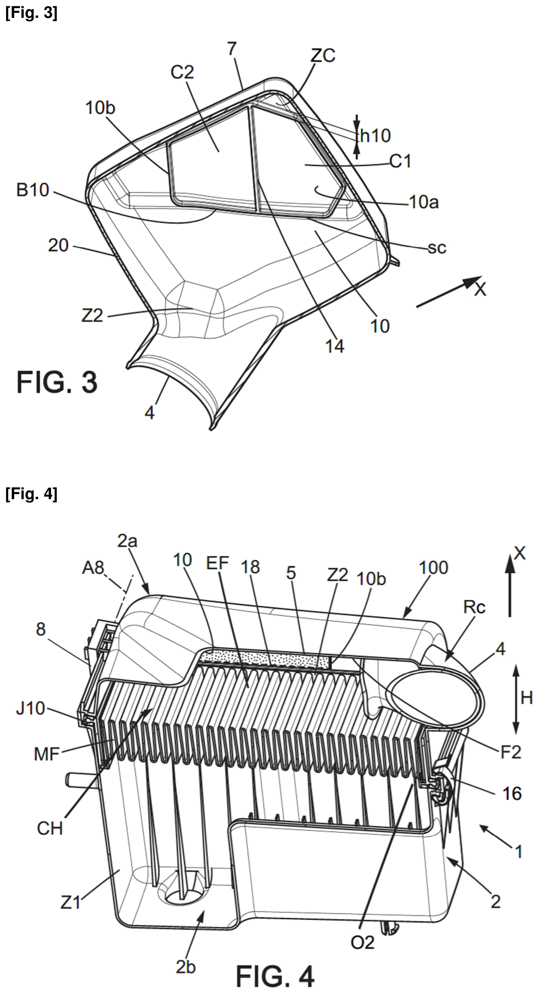

Autrement dit, le boîtier 2 de délimitation de la chambre de filtration CH peut directement constituer le support du matériau d'adsorption pendant l'assemblage, en formant un logement 10 adapté pour un remplissage, de sorte que la fermeture du logement 10 (après le remplissage adéquat en matériau 5) par une pièce/élément de recouvrement 18 perméable au gaz, possiblement de format et dimensions complémentaires/adaptées à ce logement 10, permet de finaliser l'intégration du piège 50. Le boîtier 2, complet comme par exemple dans le cas montré sur la figure 4, peut être fermé de façon étanche, possiblement en utilisant un joint périphérique J10 porté par l'élément/partie filtrante EF et/ou en disposant d'un joint adapté intercalé entre les deux composants 2a, 2b, autour de l'ouverture O2.

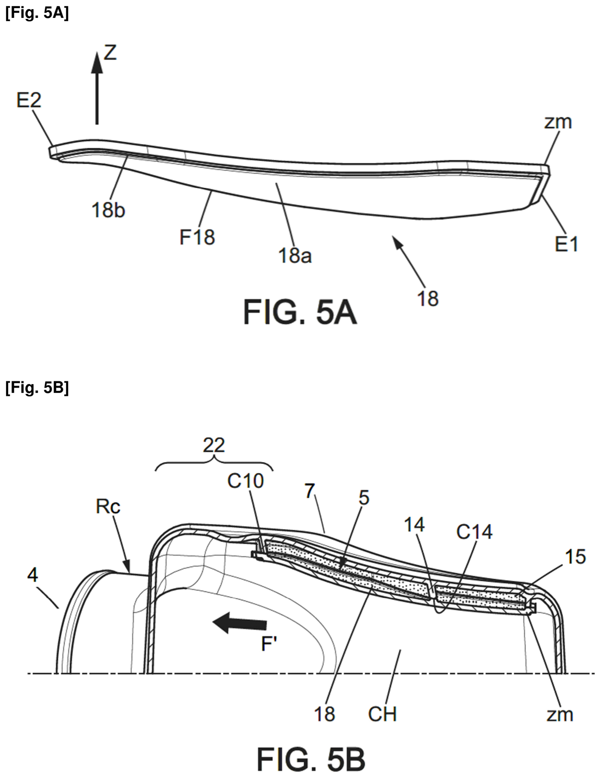

La coque ou composant externe 2a du boîtier 2 peut être formée en une pièce en incluant le logement 10 avec au moins une cavité C1, C2, C3. Un côté Z1 ou Z2 de la chambre de filtration CH, optionnellement placé au-dessus du moyen filtrant MF dans les conditions d'utilisation, est équipé du piège 50 avec le matériau 5, qui est typiquement un matériau en vrac. Ce matériau 5 qui permet l'effet d'adsorption remplit chaque cavité C1, C2, C3 et peut être agencé en couche d'adsorption, comme bien visible par exemple sur les figures 4 et 5B. Une couche d'adsorption 15, continue ou discontinue, peut alors s'étendre au plus près de l'extrémité fermée 7 ou zone similaire du premier composant 2a de boîtier.

Le matériau peut inclure ou consister en du charbon actif, de la zéolithe ou un matériau similaire présentant une surface spécifique pouvant atteindre plus de 1500 ou 2000 m²/g. Le charbon actif est un média adsorbant d'hydrocarbures qui peut être préféré car il est peu coûteux, respectueux de l'environnement et facilement disponible.

Comme bien visible sur les figures 2 et 3 par exemple, le filtre 1 présente sur le premier composant 2a une délimitation périphérique 10b pour délimiter un contour du logement 10. Dans certaines réalisations, la délimitation périphérique 10b est constituée d'un relief saillant vers l'intérieur et/ou d'au moins un flanc d'une zone creusée/dépression locale débouchant à l'intérieur du boîtier. L'élément de recouvrement 18 peut être réalisé dans un matériau perméable aux gaz, typiquement poreux, compatible avec une soudure à chaud sur une surface plastique formée dans le premier composant 2a.
Solidarisé sur la délimitation périphérique 10b du logement 10 (délimitation intégrée dans le premier composant 2a), l'élément de recouvrement 18 ferme l'ouverture 11 du logement 10 en empêchant toute perte du matériau/média d'adsorption 5.

### Exemples de construction de pièces du boîtier de filtre à air

Dans les exemples illustrés, le premier composant 2a est une coque, typiquement en matière plastique, qui présente un axe central X2, en présentant une paroi tubulaire/latérale 20 (possiblement à quatre côtés comme visible notamment sur la figure 2) qui s'étend longitudinalement depuis une extrémité 7 de composant qui est fermée, autour de l'axe central X2 jusqu'à une face ouverte. Une bride B rigide peut délimiter l'ouverture O2 de cette face, ce qui permet un montage de l'élément filtrant EF qui peut s'étendre dans un plan de cette ouverture O2 ou adjacent à cette ouverture O2. L'élément filtrant EF peut prendre appui contre un bord ou épaulement interne, à proximité de ou prévu dans la bride B, avec un contact étanche établi contre l'intérieur du boîtier 2. La bride B peut inclure des organes d'attache, par exemple des éléments de charnière 8 pour permettre une fixation du premier composant 2a sur un deuxième composant 2b formant une base du boîtier 2. Les organes d'attache peuvent comporter des éléments de charnière 8, espacés les uns des autres comme par exemple dans le cas de la figure 4, ou une charnière continue, ce qui permet dans en tout cas un montage articulé du premier composant 2a par rapport au deuxième composant 2b, suivant un axe d'articulation A8.

Plus largement, le premier composant 2a peut être creux et présenter une hauteur H supérieure à un diamètre interne D d'une section de passage de l'ouverture Rc qui est présente sur la paroi latérale 20 pour permettre au flux HCF de vapeurs d'hydrocarbures de longer la partie d'extrémité 7 fermée du premier composant 2a.

Le piège 50 peut être placé dans une zone supérieure de la chambre de filtration CH, dans les conditions d'utilisation du filtre à air 1. Tandis que le piège 50 est disposé sensiblement au même niveau ou plus haut qu'une sortie 4 placée dans un dessus du boîtier 2, dans l'exemple de la figure 1 et de la figure 4 avec ainsi une adsorption qui se déroule en aval du média/élément filtrant MF (côté propre pour la filtration du flux d'air), il est permis de prévoir un logement 10 dont la paroi de contour/délimitation périphérique 10b est formée autrement, directement dans un composant externe 2a, 2b du boîtier 2.

Indépendamment de l'option de localisation choisie pour délimiter le logement, par la paroi de délimitation périphérique 10b, le logement 10 peut présenter au moins une cavité C1, C2, C3 éloignée du port Rc en ayant un fond 10a qui est formé/délimité par la face intérieure F2 qui appartient typiquement à une portion radiale qui ferme une extrémité (extrémité fermée 7) du premier composant 2a. Chaque cavité C1, C2, C3 peut être espacée/écartée de la paroi latérale 20, avec la délimitation périphérique 10b qui ne rejoint pas la paroi latérale 20.

Au moins une partition du logement 10, formée par un relief ou cloison de partition 14 similaire prévue dans le premier composant 2a, peut s'étendre entre deux sections/tronçons opposés de la paroi de délimitation périphérique 10b. Plus largement lorsque le premier composant 2a de boîtier est formé d'une seule pièce plastique, tout cloisonnement ou élément de partition 14 approprié peut être intégré pour séparer deux cavités adjacentes dans le logement 10. L'élément de partition 14 peut être éventuellement aussi saillant, depuis la face intérieure F2, que la paroi de contour/délimitation périphérique 10b, afin de former un bord C14 de contact et éventuellement fixation avec l'élément de recouvrement 18, contribuant à maintenir l'élément de recouvrement 18 espacé du fond 10a d'une distance suffisante, possiblement sensiblement constante. La profondeur de logement h10 peut être ainsi constante, sans variation d'une cavité à une autre.

Le deuxième composant 2b peut être pourvu d'organe(s) d'ancrage ou de liaison, permettant une fixation sur un châssis d'un véhicule ou sur une structure de montage, de sorte que le premier composant 2a peut constituer une partie mobile du boîtier alors que le deuxième composant 2b reste fixe, en permettant typiquement une fixation du boîtier 2 par le bas dans les conditions d'utilisation du filtre à air 1. La mobilité du premier composant 2a peut avantageusement permettre de remplacer l'élément filtrant EF, lorsque ce dernier est monté amovible dans la chambre de filtration CH.

Dans une variante de réalisation, le composant 2a du boîtier est un élément de couvercle plat apte à former un dessus du filtre à air 1, par exemple en se solidarisant sur une ouverture d'un bol ou d'une paroi latérale du boîtier, typiquement par le dessus. La face intérieure F2 du composant 2a peut être sensiblement parallèlement à un plan de l'ouverture obturée par le composant 2a.

Le boîtier 2 peut être monté à la verticale ou globalement verticalement dans un véhicule, en présentant un fond qui forme ainsi un point bas de l'enceinte/chambre de filtration CH. De préférence, le boîtier 2 dispose d'une entrée 3 et d'une sortie 4 qui sont chacune éloignées du fond. Cette disposition peut permettre de superposer le filtre 1 sur un autre composant fonctionnel, par exemple un composant fonctionnel du circuit d'admission d'air, tel qu'un dispositif de décantation d'eau.

Par ailleurs, le boîtier 2 peut présenter un composant de boîtier 2b, par exemple en forme de bol (carter ou similaire), ayant une paroi formant un fond et une paroi latérale s'étendant autour d'un axe longitudinal parallèle ou confondu avec l'axe central du premier composant 2a. L'entrée 3 pour l'air brut peut être au moins en partie délimitée par une découpe ou une ouverture latérale dans le composant de boîtier 2b, comme visible sur la figure 1. Cette ouverture latérale peut être située à l'opposé ou à distance du fond mais elle débouche sur un côté, possiblement le même que la sortie 4. Dans une conception à deux composants 2a, 2b, le boîtier 2 comporte aussi un couvercle creux ici constitué par le premier composant 2a, apte à obturer une ouverture axiale du composant 2b (délimitée dans celui-ci à l'opposé du fond).

On comprend que le couvercle ou premier composant 2a peut permettre d'obturer l'ouverture O2 pour l'insertion de l'élément filtrant EF dans le volume interne du composant de boîtier 2b, sans obturer l'ouverture latérale correspondant à l'entrée 3 ou un quelconque passage latéral servant à former l'entrée 3 ou la sortie 4 du boîtier 2.
Le flux F d'air à filtrer (air brut) peut provenir d'une entrée de circuit par exemple pourvu d'une grille primaire retenant des feuilles ou autres éléments qui pourraient obstruer la ou les conduites du circuit d'admission d'air. Par ailleurs, lorsqu'une charnière 8 est prévue la sortie 4 est agencée typiquement sur un côté du premier composant 2a qui est opposé à ou distant de la charnière 8. L'axe central A de l'ouverture Rc peut ainsi se relever, par exemple pour disposer le premier composant 2a de façon similaire/comme dans la configuration de la figure 2, lors d'une ouverture par rotation du premier composant 2a autour de l'axe A8 d'articulation.
Plus largement, le port ou conduit de délimitation de l'ouverture Rc de circulation a typiquement une géométrie tubulaire autour de cet axe central A, qui peut ne pas intersecter l'élément filtrant EF, sachant que cet élément filtrant EF est typiquement situé plus bas en conditions d'utilisation, à l'opposé du piège 50 (donc à l'opposé de la structure à logement 10 du piège, avec la délimitation périphérique qui suit le profil de l'extrémité fermée 7 éloignée de l'élément filtrant EF).

### Exemple d'emplacement du piège à adsorption de vapeur d'hydrocarbure

L'agencement 100 peut inclure le piège 50 de façon compacte, sans protubérance externe dans le couvercle ou coque formant le premier composant 2a. Comme illustré sur les figures 1 et 4, un effet de courbure peut être prévu dans l'extrémité fermée 7 de composant (qui forme une portion radiale, transverse à l'axe X2) afin de rendre le premier composant 2a progressivement plus profond, en considérant la profondeur mesurée à partir de la bride B, au fur et à mesure qu'on s'approche de l'ouverture Rc. Le premier composant 2a peut être par exemple plus profond en s'approchant de l'ouverture Rc, ce qui est reflété aussi sur la figure 5B sans que la partie la plus profonde ne soit nécessairement recouverte par/pourvue de la couche d'adsorption 15.
Un écartement 22 latéral peut être prévu entre l'ouverture Rc et le logement 10, ce qui peut ainsi découvrir une portion de la face F2 intérieure, correspondant possiblement à la partie la plus profonde (partie la plus proche de l'ouverture RC dans le cas des figures 1 et 4, 5).

Plus généralement, le piège 50 peut présenter un contour, correspondant à la délimitation périphérique 10b, qui est éloigné du débouché intérieur de l'ouverture Rc d'une distance suffisante, par exemple au moins égale à 25 ou 40 mm, tout en étant également éloigné de l'élément filtrant EF, par exemple avec un écartement minimal de l'élément de recouvrement 18 d'au moins 30 ou 45 mm par rapport à l'élément filtrant EF.

Typiquement, de façon indépendante de la géométrie précisément adoptée pour le premier composant 2a constituant un élément de couvercle du filtre à air 1, la couche d'adsorption 15 peut s'étendre le long de la face intérieure F2 pour permettre l'adsorption d'hydrocarbures du flux HCF circulant sous l'élément de couvercle/composant 2a lorsqu'ils pénètrent dans la chambre de filtration CH, via l'ouverture Rc (formant de préférence l'unique sortie 4).
La couche d'adsorption 15 qui s'étend sous la face intérieure F2 peut remplir le logement à au moins 90% de sa profondeur h10. Ce niveau de remplissage est permis en versant le matériau en vrac 5, sous forme granulaire et/ou pulvérulente, dans une configuration pour laquelle le composant 2a est maintenu, de préférence maintenu immobile, avec une orientation définie pour laquelle le fond 10a est en bas dans le logement 10. L'élément de recouvrement 18, comme montré par exemple sur la figure 5A, peut présenter un profil prédéterminé et/ou peut suivre le profil du fond 10a pour maintenir une profondeur h10 sensiblement constante, en particulier lorsque la délimitation périphérique 10b présente une dimension constante suivant la direction de cette profondeur.

Plus largement, un pourcentage de 60% ou de 90% de remplissage du volume interne du logement 10 peut être atteint ou dépassé, ce volume interne étant délimité entre le fond 10a et l'élément de recouvrement 18 qui suit de préférence le profil d'un bord supérieur de la délimitation périphérique 10b, en définissant un contact C10 typiquement continu sur ce bord supérieur, comme visible par exemple sur la figure 5B.
La surface sc de la délimitation périphérique 10b qui est en contact avec l'élément de recouvrement 18 peut présenter une largeur constante, en étant dimensionnée comme le périmètre du logement 10, ce dernier étant partitionné ou non à l'aide d'une cloison 14.

La couche d'adsorption 15 peut s'étendre entre deux extrémités du logement, dont l'une est proximale de l'ouverture Rc et l'autre est distale de l'ouverture Rc. Sur la figure 5A, il est montré que l'élément de recouvrement 18 peut inclure une portion d'obturation 18a non-plane, qui peut optionnellement dévier vers le haut en se rapprochant de l'extrémité E2, dans l'élément de recouvrement 18, qui est proximale de l'ouverture Rc. Cet effet de pente peut favoriser l'écoulement sortant du flux F' épuré dans la zone d'aval Z2 lorsque l'ouverture Rc constitue la sortie. L'élément filtrant EF peut s'étendre parallèlement à l'extrémité fermée 7, comme dans le cas de la figure 4.

On comprend que les extrémités E1 et E2 de l'élément de recouvrement 18, opposées, avec l'extrémité E1 qui est distale (la plus éloignée) du port ou ouverture Rc de circulation, peuvent varier dans leur largeur, selon les besoins. Ces extrémités E1, E2 sont ou incluent des sous-parties de chevauchement de la délimitation périphérique 10b. Elles font partie d'une bordure périphérique 18b prévue pour recouvrir la totalité du bord supérieur de la délimitation périphérique 10b, Optionnellement, le logement 10 présente une délimitation périphérique polygonale, comme par exemple sur les cas des figures 2 et 3. Le contact C10 peut être obtenu en soudant l'élément de recouvrement 18, par exemple en appliquant une pression de maintien suivant la direction Z sur la bordure périphérique 18b lorsque cette dernière est en contact avec la délimitation périphérique 10b.

La paroi latérale 20 peut être décomposée en quatre côtés, avec une section généralement rectangulaire par exemple. Le débouché dans la chambre de filtration CH du port ou ouverture Rc peut être réalisé en chevauchement sur deux côtés de la paroi latérale 20, comme par exemple dans le cas visible sur les figures 1 et 2. Cette option de disposition permet d'optimiser l'extension du logement 10, qui peut être allongé suivant la direction d'une diagonale de la section rectangulaire (de la paroi latérale 20) qui est en travers/transverse de la direction de l'axe central A de l'ouverture Rc.

Bien entendu dans les cas illustrés sur les figures 2 et 3, l'exemple d'intégration du piège 50 correspond à une position et une géométrie particulière, de sorte que cet exemple n'est nullement limitatif. Bien qu'on ait représenté ici, pour le logement 10, un angle supérieur à 90° pour une jonction angulaire de la délimitation périphérique 10b, servant optionnellement de jonction aussi pour la cloison 14, d'autres contours sont utilisables avec conservation de certaines similitudes, par exemple l'écartement par rapport à la paroi latérale 20 de la délimitation périphérique 10b et/ou un écartement par rapport à n'importe quelle des zones de coin ZC du premier composant 2a (zones de coins ZC formées le long de l'extrémité 7 à la jonction de deux pans de paroi latérale).

Au moins deux ou trois angles dans le contour du logement, à l'intersection de deux bords de la délimitation périphérique 10b peuvent être supérieurs 90° et/ou le logement a une délimitation périphérique polygonale, de préférence avec au moins cinq côtés (l'un des bords de la jonction à un angle de plus de 90° pouvant être un bord parallèle à une face de la paroi latérale du premier composant).
Dans des options, le logement 10 peut être plus long que large suivant une direction correspondant sensiblement à une diagonale, ce qui peut permettre de constituer un bord long/le plus long pour former un tronçon sensiblement droit dans la surface de contact sc prévue pour la fixation de l'élément de recouvrement 18. Un tel tronçon droit peut être plus large que le diamètre interne D de l'ouverture Rc.

L'élément de recouvrement 18, conçu comme un bandeau flexible ou de façon similaire pour présenter une flexibilité, en étant de préférence poreux (à porosité ouverte), dispose d'une zone de marge zm qui peut déborder d'un relief dont le bord libre forme un support de soudure ou d'attache : ce bord libre correspond typiquement à la surface de contact sc. La zone de marge zm, lorsqu'elle déborde de la sorte, peut ainsi se fixer de manière continue autour de l'ouverture 11 de remplissage en pouvant reprendre un écart de dimensionnement lié à des tolérances de fabrication. Le média d'adsorption, constitué du matériau 5 granulaire ou pulvérulent, ne peut plus s'échapper d'une cavité après la fixation de l'élément de recouvrement 18.

Le logement 10 peut être incurvé, suivant une ou deux dimensions. L'élément de recouvrement 18 peut être flexible pour suivre un profil du logement 10. L'élément de recouvrement 18 est par exemple un média poreux, formant une couche (souple ou semi-rigide) dont une zone de marge annulaire zm est directement soudée ou collée sur la bordure B10 qui délimite l'ouverture 11 du logement 10 et servant d'ouverture de remplissage pour le matériau 5.
Quel que soit le mode de recouvrement pour bloquer en position la couche d'adsorption 15, permis par l'élément de recouvrement 18, on obtient un piège 50 qui réduit les échappements, dans l'environnement extérieur, d'hydrocarbures refluant (par le flux HCF, illustré en pointillés en figure 1) d'une ligne d'admission d'air d'un moteur 120.

### Procédé d'obtention de l'agencement et exemple d'assemblage de filtre

Selon un mode de réalisation, le moulage en une pièce plastique du premier composant 2a est permis dans un moule qui présente par exemple :
- une empreinte ayant une périphérie et une extrémité de pressage pour former un creux principal, avec de préférence la périphérie engagée ou complétée par un insert ou relief saillant latéral permettant de réaliser l'ouverture Rc,
- et, à l'extrémité de pressage, un ensemble en relief qui forme l'empreinte remplissant chaque cavité C1, C2, C3 à la fin du formage, avant le retrait de l'empreinte du moule.
Typiquement, la délimitation périphérique 10b (figures 3-4) peut résulter de l'introduction de matériau plastique à mouler dans une gorge annulaire/gorge adaptée prévue sur l'empreinte intérieure du moule qui permet de définir la profondeur du premier composant 2a. Une telle gorge est prévue sur la face d'empreinte qui sert à former l'intérieur de la paroi d'extrémité (extrémité fermée 7) éloignée de l'ouverture O2.

Le moulage réalisé, avec la délimitation périphérique 10b formant la ou les cavités C1, C2, C3 prêtes à être remplies et obturées, peut simplifier les étapes qui suivent pour finaliser l'agencement 100.
Le moulage peut être du type à injection (sans soufflage). Plus largement, on comprend que la mise en forme du matériau plastique du premier composant 2a, et éventuellement du deuxième composant 2b, permet de former une pièce robuste, rigide et apte à la délimitation étanche de la chambre de filtration CH, moyennant éventuellement l'ajout de joint(s) périphérique pour compléter des zones de jonction. Une construction sans partie de vissage rend l'ouverture ultérieure du boîtier 2 de filtre plus aisée.

Le procédé d'assemblage utilise donc un premier composant 2a de boîtier, moulé, permettant de délimiter la chambre de filtration CH (lorsqu'il est combiné avec un deuxième composant 2b) et d'inclure la délimitation périphérique 10b, à distance de la paroi latérale 20 du premier composant 2a (en décalage vers l'intérieur), afin de définir une contenance adaptée pour le matériau 5.
En complément du moulage ou lors de celui-ci, des moyens d'attache sont formés du côté de la bride B, en périphérie de l'ouverture O2 servant au démoulage, afin de rendre les composants 2a et 2b solidaires entre eux au sein du filtre à air 1. La solidarisation peut être réalisée, soit avant le dépôt du matériau 5, soit après la finalisation de l'agencement 100 complet, avec l'élément de recouvrement 18 fixé (de préférence de manière permanente) sur la délimitation périphérique 10b.

L'agencement 100 peut inclure un logement 10 moins large que l'ouverture O2 mais avec une longueur ou plus grande dimension qui dépasse 50% de n'importe quelle largeur/dimension latérale du premier composant 2a. La largeur de logement peut correspondre au cumul de plusieurs largeurs propres à des cavités respectives C1, C2, comme dans le cas montré sur la figure 3 par exemple.
En référence aux figures 2 et 4, le remplissage en matériau 5 en vrac est réalisé par exemple par utilisation d'un accessoire ou d'un outil qui forme une canalisation ou un guide de versement du matériau 5, avec typiquement une extrémité à une ou plusieurs ouvertures/débouché(s) qui s'engage avec la délimitation 10b pour permettre un effet anti-débordement. La face intérieure F2 est localement recouverte par le matériau 5 qui forme une couche d'adsorption 15, pour chaque cavité C1, C2, C3. Une conception avec une seule ouverture 11 de remplissage peut être préférée pour rendre le versement rapide, indépendamment de la présence ou non d'un élément de cloisonnement 14.

Pour finir, avant un retournement du composant 2a de boîtier, l'élément de recouvrement 18 peut recouvrir entièrement l'ouverture 11 de remplissage, en étant déposé et fixé sur la bordure B10 de l'ouverture 11. L'élément de recouvrement 18, lorsqu'il est poreux, présente une taille de pore d'un ordre de grandeur inférieur (donc au moins dix fois inférieur) à la taille des grains ou billes pouvant constituer le média d'adsorption. Plus largement, le matériau 5 reste confiné/retenu axialement entre le fond 10a et la face F18 interne de l'élément de recouvrement 18, dans les limites de la délimitation périphérique 10b.
Pour assurer une simplicité et robustesse de la fixation, on peut prévoir que l'élément de recouvrement 18 soit dépourvu de matériau d'adsorption ou matériau interagissant avec les hydrocarbures piégés par le matériau 5 qui remplit la ou les cavités C1, C2, C3 du logement 10. Dans des options, l'élément de recouvrement 18 est non métallique/sans métal, par exemple en PET ou autre plastique recyclable. L'élément de recouvrement 18 peut être d'épaisseur sensiblement constante et entièrement poreux, comme bien visible sur la figure 2, et/ou homogène dans sa composition et sa structure. Typiquement, l'élément de recouvrement 18 n'est ni une grille ni un composant ajouré (muni d'une ou plusieurs ouvertures) incluant des éléments de délimitation rigide de passages de flux gazeux par un cadre ou autre partie rigide similaire.

La zone de marge annulaire zm servant à la fixation, par exemple par soudure, peut être constituée en un matériau identique à la composition de la portion d'obturation 18a qui définit la face F18 (montrée notamment sur la figure 5A) en regard du fond 10a. En variante, la zone de marge zm peut être pourvue d'un relief saillant ou décalé de la portion d'obturation 18a, en étant possiblement conçue comme un cadre apte à fusionner, lors d'une soudure, contre le relief de forme et taille identique, constitué par la bordure B10.

Comme l'élément de recouvrement 18 est perméable au gaz, au moins dans sa portion d'obturation 18a, le logement 10 permet de fournir une zone de piégeage des vapeurs amenées par le flux HCF d'hydrocarbures, en sens inverse du sens de circulation normal lorsque l'agencement 100 compose une partie (supérieure) du filtre à air 1 qui délimite le côté propre de ce filtre. L'ouverture O2, entourée par la bride B, peut constituer une ouverture de montage pour permettre d'insérer au moins en partie des moyens de filtration MF du filtre à air 1 dans la chambre de filtration CH, ce qui permet d'intégrer le piège à adsorption d'hydrocarbures en regard des moyens de filtration MF, avec une distance d'écartement dans la zone d'aval Z2, par rapport au sens de filtration, qui est la zone communiquant avec l'ouverture Rc prévue dans le premier composant 2a. Un conduit ou port définissant l'ouverture Rc est typiquement moulé avec la paroi latérale 20 qui peut définir un écartement d'au moins 25 mm, de préférence au moins 35 ou 40 mm entre le logement 10 et l'ouverture O2 de montage de la partie filtrante.

Bien que les figures 2 et 3 montrent le cas où deux cavités C1, C2 ont une contenance similaire ou égale, sans présenter la même géométrie ici dans cet exemple non limitatif, on comprend que le procédé permet d'obtenir un agencement 100 qui présente, dans certaines options, une deuxième cavité C2 qui présente une contenance supérieure à celle de la première cavité C1 en présentant une géométrie différente avec un plus grand périmètre.

L'assemblage du filtre 1 peut ensuite se faire d'une manière à disposer d'un élément filtrant EF qui s'étend parallèlement au fond prévu dans le deuxième composant 2b, formant une base de boîtier comme dans le cas des figures 1 et 4 par exemple. La fixation de l'élément filtrant EF a lieu après avoir solidarisé entre eux les composants 2a, 2b, en obtenant une configuration d'ouverture du boîtier 2 avec l'ouverture O2 libérée, de même qu'une ouverture correspondante, sensiblement de même taille/format prévue sur le deuxième composant 2b. Cela peut permettre d'insérer l'élément filtrant EF, soit en première monte, soit pour une rechange dans les options de fixation qui prévoient cette possibilité. Un ou plusieurs clips 16 peuvent permettre de verrouiller la fixation du premier composant 2a sur le deuxième composant 2b, avec venue en prise sur un bord externe adapté, possiblement formé (au moins pour partie) par la bride B.

### Exemple(s) d'application

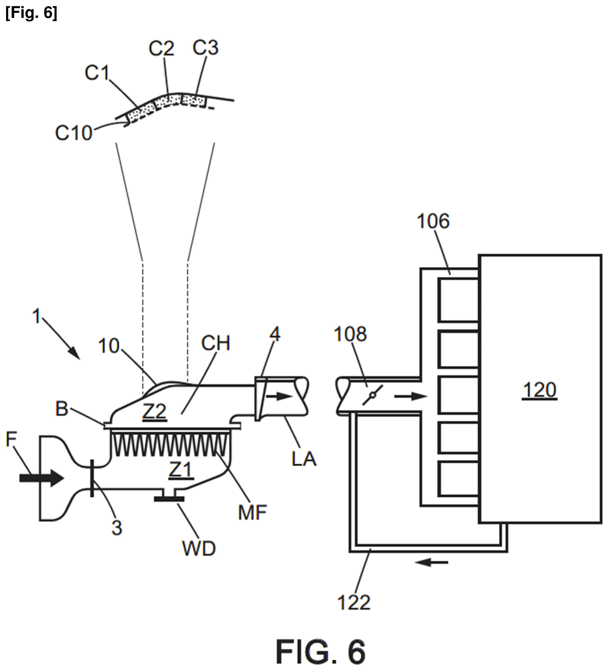

Dans l'exemple non limitatif de la figure 1 et de la figure 6, l'agencement 100 peut former au moins la moitié d'une chambre de filtration CH d'un filtre à air 1, en délimitant typiquement la zone d'aval Z2. Comme le matériau 5 est disposé dans le côté propre du boîtier 2, les vapeurs (carburant gazeux/hydrocarbures volatils) provenant du moteur 120 peuvent être préalablement captés/adsorbés par la couche d'adsorption 15 afin d'empêcher le flux HCF de pénétrer dans le côté sale via les moyens de filtration MF.
Pendant le fonctionnement, aucune circulation d'air ne peut intervenir entre la face intérieure F2 et le matériau 5 maintenu dans le logement 10, de sorte que l'élément de recouvrement 18 peut former l'unique interface d'entrée et sortie des vapeurs du piège 50. Eventuellement, une encoche ou fente similaire peut être prévue dans la délimitation périphérique 10b, mais avec dans ce cas un recouvrement de l'encoche ou fente par l'élément de recouvrement 18.

Dans une utilisation de l'agencement 100 dans une ligne d'admission d'air LA pour le moteur 120, le média d'adsorption est sous forme d'une couche 15 qui est disposée à l'intérieur du boîtier 2, le long d'un chemin d'écoulement du flux F d'air d'admission qui ressort des moyens de filtration MF. Par conséquent, le matériau 5 qui adsorbe les hydrocarbures n'est pas directement exposé à un éventuel retour de flamme, ce matériau 5 étant en outre protégé par l'élément de recouvrement 18 qui peut être dépourvu d'effet adsorbant, possiblement en étant renforcé par sa fixation sur la délimitation périphérique qui est rigide. En outre, la couche d'adsorption 15 longe la face intérieure F2 d'un composant externe rigide du boîtier : cela rend cette partie moins sensible à des effets de déformation à la pression.

Lorsque le moteur s'arrête et qu'il n'y a plus d'aspiration dans le collecteur d'admission 106, le flux HCF de vapeurs de carburant qui s'échappe du système d'admission du moteur 120 remonte jusqu'au filtre à air 1 et est adsorbé par le charbon actif ou matériau en vrac 5 similaire de l'agencement 100, au niveau du logement 10 dans la zone Z2. Cela permet en pratique de réaliser l'adsorption uniquement du côté propre/aval dans le boîtier 2, avec le flux HCF qui traverse seulement la sortie 4. Il est donc possible d'empêcher les vapeurs de carburant qui causent la pollution de l'air d'être rejetées dans l'air ambiant.

Lorsque le moteur 120 est redémarré, les vapeurs de carburant adsorbées par la couche d'adsorption 15 se dispersent dans l'air d'admission, en passant par le bas du logement 10 et en traversant l'élément de recouvrement 18. Ensuite, ces vapeurs de carburant contenues dans l'air épuré du flux F' sont aspirées dans le moteur 120 afin d'être brûlées. La délimitation périphérique 10b étant formée typiquement comme un relief du premier composant 2a, dans la zone propre, l'impact de la formation du logement 10 sur la résistance aérodynamique est faible voire supprimée, pendant le fonctionnement du filtre à air 1. Ceci peut contribuer à obtenir une meilleure consommation spécifique de carburant et une amélioration de la puissance du moteur. On comprend que le flux d'air d'admission prêt à sortir du boîtier 2, orienté latéralement vers la sortie 4, peut entrer en contact principalement tangentiel avec l'agencement 100, mais n'est pas obligé de le traverser, compte tenu de l'écartement 22 (Figure 5B). Ceci est avantageux car le piège 50 interfère peu avec le flux F' d'air s'échappant droit vers la sortie 4 et s'évacuant de la chambre de filtration CH.

Bien entendu, l'absence d'élément intermédiaire entre la face intérieure F2 et le matériau 5 facilite le travail de montage du piège 50, sans pour autant fragiliser la robustesse de l'assemblage ni réduire la longévité de la fonction d'adsorption des vapeurs d'hydrocarbures. Le premier composant 2a étant rigide, donc peu/pas déformable, il est permis de structurer le piège 50 avec le minimum de pièces/éléments d'enveloppement, en rendant l'agencement 100 plus structurel et difficilement déformable malgré les vibrations générées au cours du roulement du véhicule.
L'agencement 100 peut ainsi présenter une durée de vie importante, en s'intégrant dans un filtre à air servant typiquement de dernier filtre avant le collecteur d'admission 106 du moteur 120 ou entrée similaire de réception d'air purifié d'un moteur.

Il doit être évident pour les personnes versées dans l'art que la présente invention permet des modes de réalisation sous de nombreuses autres formes spécifiques sans l'éloigner du domaine d'application de l'invention comme revendiqué.
Par exemple, bien que l'agencement 100 ait été illustré avec l'intégration d'un logement mono-cavité ou multi-cavité avec un unique élément de recouvrement 18 dans chacun de ces cas, il est aussi permis d'utiliser plusieurs éléments de recouvrement distincts, complémentaires pour obturer différentes cavités. Dans certaines options, le logement 10 est un premier logement recevant le matériau en vrac 5 ou partie absorbante similaire formant le média d'adsorption, tandis qu'au moins un autre logement est aussi formé, en décalage du premier logement, en étant délimité directement par le premier composant 2a de boîtier. Cet autre logement peut être obturé par un élément de recouvrement additionnel, perméable au gaz.

## Revendications

1. Agencement (100) de piège à adsorption de vapeurs de carburant évaporées dans une ligne d'admission d'air (LA) d'un moteur (120) à combustion interne, l'agencement (100) comprenant :
- un premier composant (2a) de boîtier, permettant de délimiter une chambre de filtration (CH), intérieurement en particulier dans un filtre à air (1) monté sur la ligne d'admission d'air (LA) ;
- un média d'adsorption pour une adsorption de vapeurs d'hydrocarbures,
- un logement (10) avec au moins une cavité (C1, C2, C3), présentant un fond (10a) et une délimitation périphérique (10b), le logement (10) présentant une ouverture (11) de remplissage qui permet d'introduire le média d'adsorption dans chaque cavité (C1, C2, C3);
- un élément de recouvrement (18) fermant l'ouverture (11) de remplissage et fixé ou scellé sur le premier composant (2a) de boîtier en se superposant à la délimitation périphérique (10b) ;
dans lequel le premier composant (2a) inclut :
- une ouverture (Rc) d'entrée ou de sortie de flux d'air débouchant dans la chambre de filtration (CH) ;
- ledit logement (10), de façon à délimiter directement chaque cavité (C1, C2, C3) ; et
- une face intérieure (F2), décalée de ladite ouverture (Rc) d'entrée ou de sortie et dont une portion de face intérieure correspond au fond (10a) du logement (10),
et dans lequel le média d'adsorption est maintenu renfermé dans le logement (10) à l'aide de l'élément de recouvrement (18) qui est perméable au gaz, de sorte que ledit média constitue une partie d'adsorption accolée au et/ou en contact contre le premier composant (2a).

2. Agencement selon la revendication 1, dans lequel le média d'adsorption consiste en ou inclut un matériau granulaire ou en vrac (5), composé de particules d'adsorption de vapeurs d'hydrocarbures, et disposé sous forme d'une couche d'adsorption (15) qui est en contact direct avec le premier composant (2a), le premier composant étant réalisé en une seule pièce constitutive d'une face externe du boîtier (2).

3. Agencement selon la revendication 2, dans lequel le premier composant (2a) de boîtier est un couvercle bombé et/ou présentant une hauteur (H) supérieure à un diamètre interne (D) d'une section de passage de l'ouverture (Rc),
et dans lequel la couche d'adsorption (15), continue ou discontinue, s'étend :
- le long de la face intérieure (F2) pour permettre l'adsorption d'hydrocarbures (HCF) circulant dans une partie creuse du couvercle, au niveau de laquelle débouche intérieurement ledit port (Rc) formant une sortie (4) du filtre à air.

4. Agencement selon la revendication 2, dans lequel le composant (2a) de boîtier est un élément de couvercle plat ou à portion plate pour délimiter le fond (10a), apte à former un dessus du filtre à air (1),
et dans lequel la couche d'adsorption (15), continue ou discontinue, s'étend :
- le long de la face intérieure (F2) pour permettre l'adsorption d'hydrocarbures circulant sous l'élément de couvercle ; et
- avec une épaisseur minimale, permettant de remplir le logement (10) à au moins 60% de sa profondeur (h10), obtenue par un remplissage du matériau en vrac (5) entre le fond (10a) et l'ouverture de remplissage (11) au niveau de laquelle vient ensuite se positionner l'élément de recouvrement (18).

5. Agencement selon l'une quelconque des revendications précédentes, dans lequel l'élément de recouvrement (18) est flexible et poreux.

6. Agencement selon l'une quelconque des revendications précédentes, dans lequel l'élément de recouvrement (18) présente une zone de marge (zm) qui déborde d'un relief dont le bord libre forme un support de soudure ou d'attache pour fixer l'élément de recouvrement (18) de manière continue autour de l'ouverture (11) de remplissage.

7. Agencement selon l'une quelconque des revendications 1 à 6, comprenant une partition du logement (10), formée par un relief (14) du premier composant (2a),
le premier composant (2a) de boîtier étant formé d'une seule pièce plastique.

8. Agencement selon l'une quelconque des revendications 1 à 6, dans lequel le premier composant (2a) de boîtier est creux et formé d'une seule pièce en matériau plastique, une paroi latérale (20) du premier composant (2a) incluant ladite ouverture (Rc) d'entrée ou de sortie et entourant la délimitation périphérique (10b) avec un écartement prévu tout autour de cette délimitation périphérique.

9. Agencement selon l'une quelconque des revendications précédentes, dans lequel l'élément de recouvrement (18) est un média poreux, formant une couche dont une zone de marge annulaire (zm) est directement soudée ou collée sur une bordure (B10) de l'ouverture (11) de remplissage.

10. Filtre à air (1) pour une ligne d'admission d'air (LA) d'un moteur (120) à combustion interne, le filtre à air comprenant :
- une partie filtrante (EF) ;
- un boîtier (2) délimitant une chambre de filtration (CH) entre une base de boîtier et un couvercle ; et
- un piège à hydrocarbures
**caractérisé en ce que** le couvercle du filtre à air (1) constitue l'agencement (100) selon l'une quelconque des revendications précédentes, de sorte que ledit premier composant (2a) est apte à fermer la chambre de filtration (CH) en recouvrant la base, avec le piège à hydrocarbures intégré dans un volume interne du couvercle, à l'opposé d'une ouverture de montage (O2) du premier composant (2a) de boîtier qui permet d'intégrer la partie filtrante, de préférence de manière amovible, dans une position intercalaire entre le piège à adsorption et un fond de boîtier prévu dans la base.

11. Procédé d'assemblage d'un agencement (100) à partir d'un premier composant (2a) de boîtier d'un filtre à air (1) d'une ligne d'admission (LA) de moteur (120) à combustion interne, pour permettre l'intégration d'un piège à adsorption d'hydrocarbures à l'intérieur d'un boîtier du filtre à air (1), le procédé comprenant :
- la fourniture d'un premier composant (2a) de boîtier, moulé, permettant de délimiter une chambre de filtration (CH) lorsqu'il est combiné avec un deuxième composant (2b) apte à former une base de boîtier;
- un remplissage par versement d'un matériau en vrac (5), composé de particules d'adsorption de vapeurs d'hydrocarbures, dans un logement (10) formé au niveau d'une face intérieure (F2) du premier composant (2a), de manière à remplir une ou plusieurs cavités (C1, C2, C3), ledit logement (10) étant obtenu lors du moulage du premier composant (2a) de façon à présenter une ouverture (11) de remplissage qui s'étende de préférence à distance d'un fond (10a) du logement (10) ;
- fixer ou sceller un élément de recouvrement (18) sur le premier composant (2a) de boîtier, de manière à fermer ladite ouverture (11) après le remplissage, l'élément de recouvrement (18) étant perméable au gaz;
le logement (10) étant prévu à distance d'une ouverture de montage délimitée par le premier composant (2a) pour permettre d'insérer au moins en partie des moyens de filtration (MF) du filtre à air dans la chambre de filtration, ce grâce à quoi le premier composant (2a) de boîtier permet d'intégrer le piège à adsorption d'hydrocarbures en regard des moyens de filtration (MF) et dans une zone d'amont ou d'aval, par rapport au sens de filtration, qui communique avec un port ou ouverture (Rc) formée dans le premier composant (2a) par le moulage.

12. Procédé d'assemblage selon la revendication 11, dans lequel le premier composant (2a) est moulé en formant :
- une paroi d'extrémité éloignée de l'ouverture (O2) de montage ;
- une paroi latérale qui s'étend longitudinalement, autour d'un axe central de l'ouverture (O2) de montage, depuis la paroi d'extrémité jusqu'à une bride de fixation (B) ; et
- ledit port ou ouverture (Rc) dans la paroi latérale et avec un écartement (22) par rapport au logement (10) ;
et dans lequel chaque cavité du logement (10) est directement délimitée par ladite paroi d'extrémité.

13. Procédé d'assemblage selon la revendication 11 ou 12, dans lequel une première cavité (C1) et une deuxième cavité (C2) sont obtenues avec la deuxième cavité qui présente une contenance supérieure à celle de la première cavité en présentant une géométrie différente avec un plus grand périmètre.
